Europäisches Patentamt

European Patent Office

Office européen des brevets

(19)

(11) **EP 1 128 590 A1**

(12) **DEMANDE DE BREVET EUROPEEN**

(43) Date de publication:
**29.08.2001 Bulletin 2001/35**

(51) Int Cl.⁷: **H04L 1/00**, H04L 27/233

(21) Numéro de dépôt: **01400467.5**

(22) Date de dépôt: **22.02.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **24.02.2000 FR 0002325**

(71) Demandeur: **ALCATEL**
**75008 Paris (FR)**

(72) Inventeur: **Sehier, Philippe**
**Saint Germain en Laye (FR)**

(74) Mandataire: **Sciaux, Edmond et al**
**COMPAGNIE FINANCIERE ALCATEL**
**Dépt. Propr. Industrielle,**
**30, avenue Kléber**
**75116 Paris (FR)**

(54) **Système de synchronisation d'un système de télécommunication numérique à accès multiple**

(57) L'invention est relative à un procédé et à un dispositif de transmission d'informations numériques.

Le dispositif comporte un moyen (12) pour faire varier l'efficacité spectrale de la transmission. A cet effet, on affecte aux données numériques un code correcteur d'erreurs dont le taux de codage est modifiable en fonction de l'efficacité spectrale désirée.

De préférence, l'écart entre valeurs successives de taux de codage est, au moins pour certaines valeurs, au plus de 1/10.

On fait appel, par exemple à un code à bit(s) de parité et/ou à un code à répétition.

FIG.2

## Description

La présente invention est relative à un procédé et à un dispositif pour la transmission d'informations numériques, pour un système de télécommunication à accès multiples, en particulier dans lequel les conditions de propagation sont variables.

Les systèmes de télécommunication à accès multiples sont par exemple des systèmes de téléphonie cellulaire ou des systèmes de communication par satellite(s) dans lesquels les communications entre terminaux s'effectuent par l'intermédiaire d'une station de base.

Dans les systèmes de télécommunication de type à liaisons radioélectriques, les conditions de propagation sont en général variables. Elles dépendent en particulier des conditions atmosphériques, de la position et du déplacement d'un terminal (si celui-ci est mobile) et, dans le cas d'un système de télécommunication par satellite(s), de la position du terminal dans la zone de vision du satellite et de la position de ce dernier si celui-ci est défilant. Dans ces conditions la forme d'onde du signal, notamment la modulation, doit, de préférence, tenir compte des conditions changeantes de propagation.

En outre, une station de base communique habituellement avec des terminaux qui peuvent émettre selon des puissances différentes, et selon des trajets pour lesquels les conditions de propagations sont différentes. On rappelle qu'un émetteur est caractérisé principalement par sa puissance isotrope rayonnée équivalente (PIRE en abrégé) qui est le produit de la puissance de son amplificateur par le gain de son antenne.

Par ailleurs, l'augmentation continuelle de la quantité d'informations à transmettre impose une utilisation optimale de la bande de fréquences allouée à chaque opérateur. Autrement dit, il est préférable d'optimiser l'efficacité spectrale des communications, cette efficacité étant le nombre de bits transmis par unité de temps (seconde) et par unité de fréquence (Hertz). Il est préférable que cette optimisation soit effectuée en permanence, c'est-à-dire qu'elle puisse s'adapter à des conditions changeantes, telles que la propagation ou la puissance des terminaux.

A cet effet, on a déjà proposé de modifier le taux de codage d'un code correcteur d'erreurs en fonction de la puissance d'un émetteur d'informations.

L'invention résulte de la constatation que les procédés connus ne permettent pas véritablement une optimisation permanente de l'efficacité spectrale et/ou une minimisation du taux d'erreurs ou de pertes de paquets. En outre, le procédé connu est complexe.

L'invention fait appel à des technologies simples et permet une véritable optimisation permanente de l'efficacité spectrale et/ou des performances.

Le procédé de transmission conforme à l'invention est caractérisé en ce que les informations numériques à transmettre sont affectées d'un code correcteur d'erreurs et en ce que le taux de codage de l'émetteur est déterminé par le récepteur en fonction de la puissance reçue de l'émetteur et l'écart entre valeurs successives de taux de codage est, en partant de l'unité, et au moins pour certaines valeurs, au plus de 1/10.

Le choix de taux de codage variant par pas fins permet d'optimiser à tout instant les performances, c'est-à-dire l'efficacité spectrale et/ou le taux d'erreurs ou de pertes de paquets.

Dans le mode de réalisation préféré de l'invention, on fait appel à un code à bits de parité et/ou à un code à répétition et on choisit le taux de codage du code à bits de parité et/ou le facteur de répartition en fonction du taux de codage désiré.

On rappelle ici que le taux de codage est le rapport entre le nombre de bits entrants et le nombre de bits sortants. Par exemple si on fait appel à un code de parité qui consiste à ajouter 1 bit pour n bits d'information, le taux de codage est n/n+1.

Ainsi, dans un mode de réalisation, on fait appel à un codage de parité. Dans ce cas, le taux de codage peut prendre plusieurs valeurs comprises entre 1/2 et 1.

Pour permettre un taux de codage inférieur à 1/2, de préférence, on combine ce code de parité avec un code à répétition. On rappelle qu'un code à répétition consiste simplement à répéter au moins une fois chaque bit.

Dans ces conditions, si le taux de codage de parité est n/n+1, la combinaison de ce code avec un code à répétition fournit un taux de codage : $\frac{n}{p(n+1)}$, $\frac{1}{p}$ étant le taux de codage du code à répétition (p est le nombre de répétitions de chaque bit).

Bien que l'utilisation d'un code à parité et/ou à répétition soit préférée, car elle permet une réalisation simple, l'invention n'est, bien entendu, pas limitée à l'utilisation de ces codes. Pour faire varier l'efficacité spectrale, d'autres codes peuvent être utilisés tels que des turbo-codes (appelés aussi codes produits), des codes convolutionnels, des codes blocs, ces divers codes pouvant être poinçonnés.

Il est à noter qu'avec l'invention, pour faire varier l'efficacité spectrale et optimiser l'émission, on fait appel à une technologie connue, en général simple. La simplification est d'autant plus importante que l'émission fait en général appel à un codage correcteur et que l'invention tire avantage du codage correcteur d'erreur pour faire varier l'efficacité spectrale.

Le code correcteur d'erreur utilisé pour faire varier l'efficacité spectrale et/ou optimiser les performances peut être suffisant pour protéger l'émission contre les erreurs de transmission. Il peut aussi être nécessaire de renforcer ce code correcteur par un autre code correcteur disposé en amont (à l'émission) et, pour cette raison, appelé "code externe".

De préférence, la transmission est du type TDMA ("Time Division Multiple Access", accès multiples à partage de temps).

Quel que soit le codage correcteur d'erreurs utilisé, on constate qu'un taux de codage élevé correspond à un temps de transmission réduit. Ce taux de codage élevé est utilisé quand on dispose d'une puissance (ou PIRE) relativement importante. Un taux de codage faible présente l'inconvénient d'un temps de transmission élevé mais est utilisable quand la puissance (ou PIRE) disponible est faible.

De préférence, le codage d'erreurs à taux variable est combiné avec une modulation permettant de minimiser les fluctuations d'enveloppe, telle qu'une modulation de phase du type MSK (Minimum Shift Keying) qui est une modulation de fréquence à enveloppe constante. On peut aussi faire appel à une modulation GMSK, c'est-à-dire à une modulation MSK combinée à un filtrage Gaussien de la phase permettant de resserrer l'espacement entre porteuses en diminuant la hauteur des lobes secondaires.

Quand on fait appel à une modulation MSK ou GMSK, le recul de sortie de l'amplificateur utilisé est de 0 dB, ce qui permet une utilisation optimale de l'amplificateur. On rappelle que le recul par rapport à la puissance de saturation d'un amplificateur (ou recul de sortie) se définit par la quantité suivante : $10\log\frac{P_{sat}}{P_m}$, $P_{sat}$ étant la puissance de saturation et $P_m$ la puissance de sortie pour un signal d'entrée de niveau donné. Ce recul permet que les amplificateurs d'émissions fonctionnent de façon pratiquement linéaire avec une distorsion minimale des signaux.

On peut aussi utiliser une modulation QPSK (modulation de phase à quatre états ou "Quadrature Phase Shift Keying") ou OQPSK (offset QPSK) qui consiste à décaler d'un demi-temps symbole les voies en phase et en quadrature de façon à minimiser la modulation d'amplitude. Dans ce cas, le recul de sortie est voisin de 2 dB.

L'invention est relative, de façon générale, à un procédé pour la transmission d'informations numériques, qui est caractérisé en ce qu'on affecte aux données numériques un code correcteur d'erreurs dont le taux de codage est déterminé par le récepteur associé en fonction de la puissance reçue de l'émetteur, l'écart entre valeurs successives de taux de codage étant, en partant de l'unité (1), et au moins pour certaines valeurs, au plus de 1/10.

Le code correcteur d'erreurs est de préférence choisi parmi le groupe comprenant : des codes en blocs et des blocs convolutionnels, les codes pouvant être poinçonnés et/ou concaténés.

De préférence, on fait appel à un code à bit(s) de parité et/ou à un code à répétition. Dans ce cas, on choisit avantageusement le taux de codage du code à bit(s) de parité et/ou le facteur de répétition en fonction du taux de codage désiré.

Les données numériques codées sont, pour la transmission, de préférence modulées en phase, avantageusement une modulation minimisant les fluctuations d'enveloppe.

Pour la réception d'informations numériques émises selon le procédé dans lequel on prévoit un code à bit(s) de parité et/ou un code à répétition, le décodage comprend, dans une réalisation, en série, un décodage de signaux codés à répétition suivi par un décodage de signaux codés avec des bits de parité.

Dans ce cas, les signaux de synchronisation sont de préférence extraits du décodage de signaux codés avec un code à répétition.

Les données codées sont par exemple entrelacées.

Dans un mode de réalisation, le rythme des transmissions des symboles est constant et indépendant du taux de codage.

Quand l'émetteur fait partie d'un système de télécommunication multipoints à point ou point à multipoints, l'accès de l'émetteur au récepteur s'effectue par exemple en partage de temps.

L'invention s'applique à un système de télécommunication du type cellulaire dans lequel chaque terminal émet vers une station de base et reçoit ses signaux d'une station de base, notamment quand des terminaux sont de puissances différentes, et/ou quand les conditions de propagation entre la station de base et les terminaux sont variables.

L'invention concerne aussi un dispositif de transmission d'informations numériques faisant appel au procédé défini ci-dessus,

D'autres caractéristiques et avantages de l'invention apparaîtront avec la description de certain de ses modes de réalisations, celle-ci étant effectuée en se référant aux dessins ci-annexés sur lesquels :

la figure 1 est un schéma de paquets numériques émis par un émetteur selon l'invention,
la figure 2 est un schéma d'un système de télécommunications conforme à l'invention,
la figure 3 est un schéma d'un émetteur selon l'invention, et
la figure 4 est un schéma d'un récepteur selon l'invention.

L'exemple que l'on va maintenant décrire en relation avec les figures concerne un système de télécommunication par satellite(s) dans lequel une partie importante de la surface du globe terrestre est divisée en zones, par exemple circulaires, d'un diamètre de plusieurs centaines de kilomètre et, à chaque zone, est affectée une station de base ou station de gestion, quelquefois appelée aussi passerelle. Les communications entre terminaux s'effectuent par l'intermédiaire d'un satellite défilant. Ainsi, un terminal appelant un autre terminal dans la même zone ou dans une zone différente, ou appelant un terminal relié à un autre système de télécommunication, transmet ses signaux à la station de base par l'intermédiaire du satellite et c'est la station de base qui achemine les signaux vers le terminal destinataire, via un réseau.

Dans ce système de télécommunication, les terminaux sont de deux types, à savoir, d'une part, des terminaux de type résidentiel, notamment destinés à une utilisation par des usagers particuliers et, d'autre part, des terminaux de type professionnel. Les terminaux résidentiels présentent une puissance d'émission (ou PIRE) et une puissance de réception réduites alors que les terminaux de type professionnel présentent des puissances d'émission et de réception sensiblement plus importantes. Étant donné que toutes les communications passent par l'intermédiaire de la station de base et que les terminaux disposent, naturellement, d'une puissance limitée, cette station détermine à chaque instant les caractéristiques des communications transmises par chacun de ces terminaux. Ces caractéristiques sont déterminées de façon à maximiser la capacité de transmission du système.

Ainsi, selon l'invention, la station de base règle l'efficacité spectrale de chaque terminal en fonction de sa puissance ou de sa PIRE (Puissance Isotrope Rayonnée Équivalente). Par exemple, les terminaux de type professionnel auront une efficacité spectrale de 1 bit par seconde par Hertz, alors qu'on conférera aux terminaux résidentiels une efficacité spectrale inférieure, dépendant de leur puissance ou de leur PIRE.

Dans ce qui suit, pour simplifier, on utilisera l'expression "puissance" pour désigner la puissance proprement dite ou la PIRE.

Pour obtenir ce réglage d'efficacité spectrale, on affecte aux signaux numériques émis par chaque terminal un code correcteur d'erreurs dont le taux est variable en fonction de l'efficacité spectrale désirée.

Le taux d'un code correcteur d'erreurs est le rapport entre le nombre de bits entrants et le nombre de bits sortants. Ce taux est donc inférieur à 1 (un). On comprend qu'une transmission sans code correcteur, dont le taux est de 1, sera la plus rapide, les symboles étant tous transmis au même rythme, alors que les communications transmises avec un taux de codage inférieur à 1 seront d'autant plus lentes que ce taux est faible.

Autrement dit, pour les terminaux ayant la plus faible puissance, le temps de transmission des informations utiles sera plus long que pour les terminaux ayant la puissance la plus élevée, mais ces terminaux à plus faible puissance seront mieux protégés contre les erreurs de transmission.

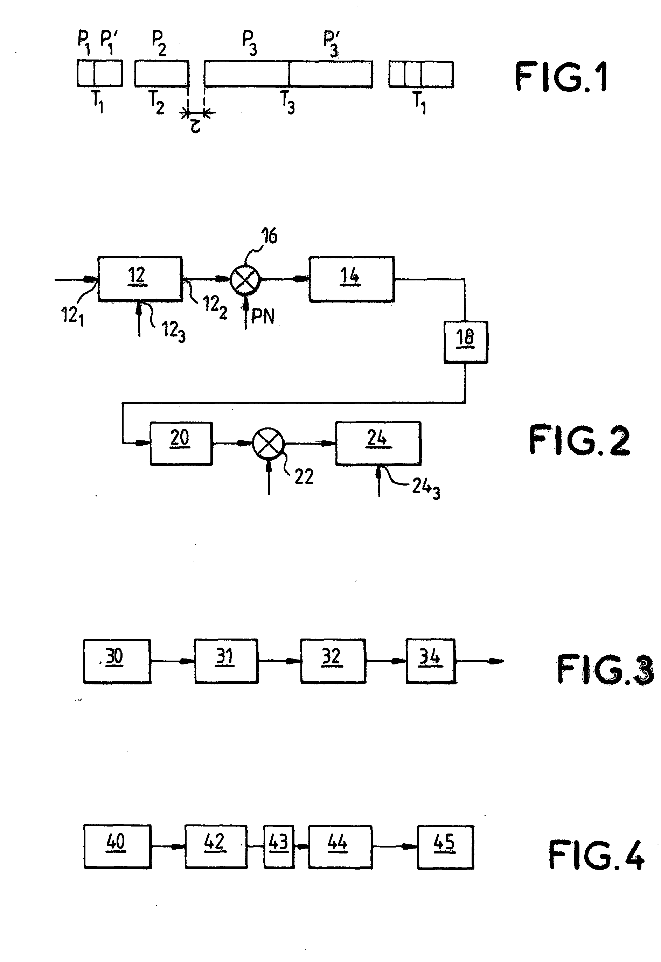

On a représenté sur le schéma de la figure 1 une transmission de paquets sur une porteuse donnée. Ces paquets, qui correspondent à des terminaux différents $T_1$, $T_2$, $T_3$, sont transmis en multiplexage dans le temps.

Dans cet exemple, un terminal $T_1$ transmet deux paquets $P_1$ et $P'_1$, un terminal $T_2$, un paquet $P_2$, et un terminal $T_3$, deux paquets $P_3$ et $P'_3$.

Les paquets transmis par des terminaux différents sont séparés par des temps de garde $\tau$, dimensionnés de telle sorte qu'il n'y ait pas de collision entre paquets, même dans le cas le plus défavorable de désynchronisation.

Dans l'exemple, le terminal $T_1$ dispose d'un bilan de liaison favorable, ce qui lui permet d'utiliser une configuration de codage à taux élevé, et donc une faible durée de transmission pour chaque paquet. Inversement, le terminal $T_3$ dispose d'un bilan de liaison défavorable et transmet chaque paquet sur une durée plus importante.

L'attribution des instants, des durées et des configurations de transmission, est effectuée par la station centrale. En mode réservé (communication établie), les configurations de transmission (notamment le taux de codage) sont déterminées individuellement pour chaque terminal en fonction des informations fournies par un moyen contrôlant les puissances ou, de façon plus générale, par un moyen de gestion des ressources radio.

Les informations d'attribution sont transmises aux terminaux par un canal de signalisation.

En mode d'accès aléatoire, qui est utilisé notamment pour l'accès du terminal lors de son inscription (c'est-à-dire lors de sa première installation dans le réseau ou, de façon générale, lorsqu'il doit se réenregistrer, par exemple suite à un incident), un certain nombre d'intervalles de temps sont réservés par la station centrale. La position dans la trame, ainsi que les caractéristiques de transmission sont transmises aux terminaux au moyen d'un canal de signalisation diffusée.

Sur la figure 2, on a représenté un schéma de principe de la transmission de signaux depuis un terminal vers la station de base.

Dans le terminal, on prévoit un codeur 12 qui affecte un code correcteur d'erreurs aux signaux d'entrée. Il transforme donc les données numériques appliquées sur son entrée $12_1$ en des données numériques apparaissant sur sa sortie $12_2$. Ces données de sortie présentent un nombre de bits supérieur au nombre de bits d'entrée. Si le nombre de bits appliqué sur l'entrée $12_1$ est n et le nombre de bits apparaissant sur la sortie $12_2$ est n+k, le taux de codage est n/n+k.

Le taux de codage est réglable par des signaux de commande appliqués sur une entrée $12_3$ du codeur 12. Dans l'exemple, ces signaux de commande sont fournis par la station de base.

Les signaux de sortie du codeur 12 sont transmis à l'entrée d'un modulateur 14, par exemple un modulateur de phase à deux états, de type OQPSK.

Préalablement à la modulation, les signaux codés sont affectés d'un pseudo-bruit grâce à un générateur 16 de pseudo-bruit. Ce générateur superpose une séquence pseudo-aléatoire aux signaux émis. Cette séquence pseudo-aléatoire est caractéristique de la zone concernée, ce qui permet de limiter les interférences entre zones adjacentes. Les signaux sortant du modulateur sont ensuite émis par le canal de transmission 18 (comprenant un satellite défilant dans l'exemple)

La station de base comporte : des moyens de démodulation 20 et de synchronisation, un générateur 22 de pseudo-bruit appliquant la séquence inverse de celle fournie par le générateur 16, et un décodeur 24, qui reçoit sur une entrée $24_3$, la même information de taux de codage que celle appliquée sur l'entrée $12_3$ du codeur 12.

Le démodulateur 20 comporte un filtre de Nyquist, un moyen de transposition en bande de base et des moyens d'échantillonnage.

Les codes correcteurs d'erreurs qui peuvent être utilisés sont des codes en bloc, des codes convolutionnels, des codes poinçonnables et des codes de type à concaténation.

On rappelle ici qu'un code à poinçonnage consiste à utiliser un code de base à faible taux de codage et à poinçonner ce code de base, c'est-à-dire à supprimer certains bits redondants en fonction du taux de codage désiré.

Dans le mode de réalisation préféré de l'invention, on fait appel à des codes de parité, à des codes à répétition et à la concaténation de tels codes.

Ainsi, dans un exemple permettant d'obtenir une répartition optimale de valeurs de taux de codage :

Un taux de codage, ou une efficacité spectrale, de 1 est obtenu sans codage correcteur d'erreurs.

Un taux de codage, ou efficacité spectrale, de 11/12 est obtenu avec un code ajoutant un bit de parité après 11 bits.

De même, un taux de 10/12 est obtenu avec un code de parité de 5/6.

Un taux de 9/12 est obtenu avec un code de parité de 3/4.

Un taux de codage de 8/12 est obtenu avec un code de parité de 2/3

Un taux de codage de 6/12 est obtenu avec un code à répétition, pour lequel chaque bit est répété une fois.

Un taux de codage de 5/12 est obtenu par la concaténation d'un code de parité 5/6 et d'un code à répétition de facteur 2 (une seule répétition)

Un taux de codage de 4/12 est obtenu avec un code à répétition de facteur 3, c'est-à-dire que chaque bit est répété deux fois.

Enfin, un taux de codage de 3/12 est obtenu avec un code à répétition de facteur 4 (chaque bit est reproduit trois fois)

Pour obtenir des pas plus fins entre taux de codage successifs, on peut utiliser d'autres concaténations de code(s) de parité et de code(s) à répétition. Par exemple, un taux de codage de 5,5/12 est obtenu par la concaténation d'un code à répétition d'un facteur 2 et d'un code de parité 11/12, et un taux de codage de 4,5/12 est obtenu par la concaténation d'un code à répétition de facteur 2 et d'un code de parité 3/4. Enfin, un taux de codage de 3,5/12 est obtenu par la concaténation d'un code à répétition d'un facteur 2 et d'un code à parité 7/12.

L'échelle de quantification des valeurs et donc des pas, résulte d'un compromis entre les performances souhaitées et la complexité. De manière à diminuer la complexité, il peut être envisagé de supprimer le codage 7/12 qui n'est pas un code de parité, et pose donc des problèmes spécifiques de décodage. L'admissibilité de la dégradation de performances entraînée par cette simplification est fonction de la probabilité d'apparition de chaque configuration de codage, et doit être analysée au cas par cas.

On a représenté sur la figure 3 un terminal utilisant la concaténation d'un codage à parité et d'un codage à répétition.

Ainsi, la partie émission du terminal comporte un codeur externe 30 dont la sortie est connectée à l'entrée d'un entrelaceur 31 connecté à l'entrée d'un codeur à parité 32 qui délivre ses signaux à l'entrée d'un codeur à répétition 34. Les signaux du codeur 34 sont transmis au modulateur 14. Le signal est ensuite transmis sur le canal radio 18. Ce canal introduit un retard, une rotation de phase et un décalage en fréquence du signal.

Le codeur externe 30 a pour but de renforcer le codage correcteur d'erreur au cas où celui apporté par les codeurs 32 et 34 serait insuffisant.

La figure 4 représente la partie de réception se trouvant, dans cet exemple, dans la station de base. Cette partie de réception comprend un démodulateur QPSK 40 dont la sortie est connectée à l'entrée d'un décodeur 42 de code à répétition délivrant ses signaux à un décodeur 44 de code interne, notamment de code de parité. La sortie de ce décodeur 44 est connectée à l'entrée d'un dispositif d'entrelacement puis à un décodeur externe 45.

Dans cet exemple, la récupération 43 de phase et de fréquence est effectuée entre la sortie du décodeur 42 du code à répétition et l'entrée du décodeur 44 du code de parité.

Cette disposition permet au dispositif de récupération de phase d'opérer sur des symboles dont le rapport signal sur bruit est augmenté du gain de traitement du code à répétition, c'est à dire avec un gain en dB de 10.logn, n étant le nombre de répétitions. Les performances du dispositif de récupération de phase s'en trouvent donc améliorées.

Les considérations ci-dessous sont également utiles pour bien comprendre les caractéristiques et avantages de l'invention :

La puissance à utiliser par un émetteur pour une communication donnée peut être mise sous la forme :

$$P_e = A.\gamma_b(r).r.M.\frac{N_o}{T_c} \qquad (1)$$

Où :

- $P_e$ est la puissance émise,
- *A* représente le produit des gains et atténuations du signal entre l'émetteur et le récepteur,
- $\square_b$ (r) est, au point de fonctionnement, le rapport entre l'énergie par bit d'information et la densité de puissance de bruit thermique et d'interférence,
- r désigne le taux de codage global,
- M représente le nombre de bits par symbole (de telle sorte que $2^M$ soit le nombre d'états de la constellation),
- $N_o$ est la densité de bruit thermique et d'interférences, et
- $T_C$ est la durée des symboles modulées ou du "chip" dans un système à étalement de spectre.

Dans l'invention, le taux de codage r est le produit de 3 termes :

$$r = r_{fixe} \cdot r_{variable} \cdot r_{répétition}$$

- le premier terme ($r_{fixe}$) est relatif au code qui ne participe pas à la variation du taux (un turbo code dans l'exemple),
- le second terme ($r_{variable}$) est celui qui participe au réglage fin de l'efficacité spectrale (mais dans une plage limitée), et

    - le troisième terme ($r_{répétition}$) permet des ajustements par pas grossiers (1/2, 1/3, 1/4, etc ...), mais dans dans une grande dynamique.

$Y_b$ (r), qui est le rapport entre l'énergie par bit et la densité de puissance de bruit, représente la valeur nécessaire pour obtenir la qualité nécessaire en taux d'erreurs et/ou en taux de perte de paquets (c'est-à-dire le point de fonctionnement recherché en général), pour un schéma de codage de taux r.

En effet, le point de fonctionnement est, en général, fonction du schéma de codage considéré. Mais dans un schéma de codage correct, cette valeur est peu dépendante du taux. On peut même obtenir des points de fonctionnement plus bas lorsque le taux est faible.

Pour un code à répétition, le point de fonctionnement est complètement indépendant du nombre de répétitions. Dans l'invention, le point de fonctionnement est quasi constant dans toute la gamme de variation du taux de codage.

La formule (1) ci-dessus montre donc bien que diminuer le taux permet de diminuer la puissance émise (tous les autres termes restant égaux par ailleurs).

Le code correcteur d'erreur est, dans un mode de réalisation, décodé à l'aide d'un algorithme de type connu sous la dénomination SISO (Soft In Soft Out). Cet algorithme accepte à son entrée, et produit à sa sortie, des valeurs dites pondérées, c'est-à-dire dont les amplitudes sont proportionnelles à la fiabilité du bit associé. Cette méthode, permettant au code externe d'opérer avec des valeurs pondérées à son entrée, procure un gain de performance par rapport à un algorithme de décodage produisant des décisions fermes. Cet algorithme est, par exemple, l'algorithme décrit dans l'article "Optimal Decoding of Linear Codes For Minimizing Symbol Error Rate" (Décodage optimal de codes linéaires pour minimiser le taux d'erreurs de symbole) de LR. Bahl, J. Coke, F. Jelinek et J. Raviv, paru dans "IEEE transactions on Information Theory", mars 1974, ou un algorithme de recherche heuristique. Lorsqu'on utilise des codes internes de parité et à répétition, l'implémentation de ces algorithmes ne présente pas de difficultés particulières, les codes internes étant courts.

Le dispositif d'entrelacement 31, inséré entre le codeur externe et le codeur interne (figure 3), à l'émission, et de désentrelacement, inséré entre le décodeur interne et le décodeur externe à la réception sont utilisés pour décorréler les valeurs pondérées produites par le décodeur interne. Ces dispositifs visent à améliorer les performances en taux d'erreur du code externe. On sait que l'algorithme d'entrelacement utilisé et son paramétrage dépendent du type de code externe utilisé ; le choix de l'algorithme et son paramétrage résultent d'un compromis entre le gain de performance et le retard apporté.

Autrement dit, le canal de transmission fournit des entrées pondérées à l'entrée du décodeur interne, de taux variable (parité et répétition). Ce décodeur interne de taux variable fournit des sorties pondérées qui sont appliquées, par l'intermédiaire d'un dispositif de désentrelacement, à l'entrée du décodeur externe de taux fixe. Ainsi, le décodeur externe, de taux fixe, fonctionne avec des entrées pondérées, donc dans des conditions optimales.

## Revendications

1. Procédé pour la transmission d'informations numériques, caractérisé en ce qu'on affecte aux données numériques à transmettre un code correcteur d'erreurs dont le taux de codage est déterminé par le récepteur associé en fonction de la puissance reçue de l'émetteur, en ce que l'écart entre valeurs successives de taux de codage est, en partant de l'unité, et au moins pour certaines valeurs, au plus de 1/10, et en ce que le taux de codage est, de préférence, fonction de l'efficacité spectrale désirée.

2. Procédé selon la revendication 1, caractérisé en ce que le code correcteur d'erreurs est choisi parmi le groupe comprenant : des codes en blocs et des blocs convolutionnels.

3. Procédé selon la revendication 2, caractérisé en ce que les codes sont poinçonnés et/ou concaténés.

4. Procédé selon la revendication 2 ou 3, caractérisé en ce qu'on fait appel à un code à bit(s) de parité et/ou à un code à répétition.

5. Procédé selon la revendication 4, caractérisé en ce qu'on choisit le taux de codage du code à bit(s) de parité et/ou le facteur de répétition en fonction du taux de codage désiré.

6. Procédé selon l'une quelconque des revendications précédentes, caractérisé en ce que les données numériques codées sont, pour la transmission, modulées en phase, de préférence une modulation minimisant les fluctuations d'enveloppe.

7. Procédé pour la réception d'informations numériques émises selon le procédé de la revendication 4, caractérisé en ce qu'il comporte, en série, un décodage de signaux codés à répétition suivi par un décodage de signaux codés avec des bits de parité.

8. Procédé selon la revendication 7, caractérisé en ce que les signaux de synchronisation sont extraits du décodage de signaux codés avec un code à répétition.

9. Procédé selon l'une quelconque des revendications précédentes, caractérisé en ce que les données codées sont entrelacées.

10. Procédé selon l'une quelconque des revendications précédentes, caractérisé en ce que le rythme des transmissions des symboles est constant et indépendant du taux de codage.

11. Procédé selon l'une quelconque des revendications précédentes, caractérisé en ce que, l'émetteur faisant partie d'un système de télécommunication multipoints à point ou point à multipoints, l'accès de l'émetteur au récepteur s'effectue en partage de temps.

12. Application du procédé selon l'une quelconque des revendications précédentes à un système de télécommunication du type cellulaire dans lequel chaque terminal émet vers une station de base et reçoit ses signaux d'une station de base.

13. Système selon la revendication 12, caractérisé en ce qu'il comporte des terminaux de puissances différentes.

14. Système selon la revendication 12 ou 13, caractérisé en ce que les conditions de propagation entre la station de base et les terminaux sont variables.

15. Dispositif de transmission d'informations numériques, caractérisé en ce qu'il comporte un moyen (12) pour faire varier l'efficacité spectrale de la transmission, comprenant un moyen pour affecter aux données numériques un code correcteur d'erreurs dont le taux de codage est modifiable en fonction de l'efficacité spectrale désirée, ce code étant tel que l'écart entre valeurs successives de taux de codage étant, en partant de un, et au moins pour certaines valeurs, au plus de 1/10, le taux de codage de l'émetteur étant déterminé par le récepteur associé en fonction de la puissance reçue de l'émetteur.

16. Dispositif selon la revendication 15, caractérisé en ce que le code correcteur d'erreurs est choisi parmi le groupe comprenant : des codes en blocs et des blocs convolutionnels.

17. Dispositif selon la revendication 16, caractérisé en ce que les codes sont poinçonnés et/ou concaténés.

18. Dispositif selon la revendication 16 ou 17, caractérisé en ce qu'on fait appel à un code à bit(s) de parité et/ou à un code à répétition.

19. Dispositif selon la revendication 18, caractérisé en ce qu'on choisit le taux de codage du code à bit(s) de parité et/ou le facteur de répétition en fonction du taux de codage désiré.

20. Dispositif selon l'une quelconque des revendications 15 à 19, caractérisé en ce qu'il comprend un modulateur de phase pour moduler, en vue de leur transmission, les données numériques codées, ce modulateur appliquant de préférence une modulation minimisant les fluctuations d'enveloppe.

21. Dispositif selon l'une quelconque des revendications 15 à 20, caractérisé en ce que les données codées sont entrelacées.

22. Dispositif selon l'une quelconque des revendications 15 à 24, caractérisé en ce que le rythme des transmissions des symboles est constant et indépendant du taux de codage.

23. Dispositif selon l'une quelconque des revendications 15 à 22, caractérisé en ce que, faisant partie d'un système de télécommunication multipoints à point ou point à multipoints, l'accès de l'émetteur au récepteur s'effectue en partage de temps.

24. Dispositif pour la réception d'informations numériques émises selon le procédé de la revendication 4, caractérisé en ce qu'il comporte, en série, un décodeur de signaux codés à répétition suivi par un décodeur de signaux codés avec des bits de parité.

25. Dispositif selon la revendication 24, caractérisé en ce que les signaux de synchronisation sont extraits du décodeur de signaux codés avec un code à répétition.

FIG.1

FIG.2

FIG.3

FIG.4

**Office européen des brevets**

## RAPPORT DE RECHERCHE EUROPEENNE

Numéro de la demande

EP 01 40 0467

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 5 909 434 A (ZEHAVI EPHRAIM ET AL) 1 juin 1999 (1999-06-01) | 1-5,7, 9-19, 21-24 | H04L1/00 H04L27/233 |
| Y | * abrégé * | 6,8,20, 25 | |
| | * colonne 2, ligne 22 - ligne 31 * * colonne 3, ligne 43 - ligne 62 * * colonne 5, ligne 4 - ligne 41 * | | |
| Y | US 5 822 318 A (GILHOUSEN KLEIN S ET AL) 13 octobre 1998 (1998-10-13) * abrégé * * colonne 2, ligne 57 - ligne 65 * * colonne 3, ligne 4 - ligne 18 * * colonne 8, ligne 50 - ligne 55 * | 6,20 | |
| Y | US 4 621 368 A (ONOE SEIZO ET AL) 4 novembre 1986 (1986-11-04) * colonne 5, ligne 39 - ligne 51; figure 9 * | 8,25 | |
| | | | **DOMAINES TECHNIQUES RECHERCHES (Int.Cl.7)** |
| A | US 5 729 557 A (PETRANOVICH JAMES E ET AL) 17 mars 1998 (1998-03-17) * abrégé * * colonne 2, ligne 36 - ligne 49 * * colonne 4, ligne 11 - ligne 25 * * colonne 4, ligne 43 - ligne 47 * * colonne 5, ligne 1 - ligne 17 * * colonne 6, ligne 20 - ligne 25 * * colonne 8, ligne 1 - ligne 3 * | 1,15 | H04L H03M |
| | -/-- | | |

Le présent rapport a été établi pour toutes les revendications

| Lieu de la recherche | Date d'achèvement de la recherche | Examinateur |
|---|---|---|
| LA HAYE | 5 juin 2001 | Papantoniou, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## RAPPORT DE RECHERCHE EUROPEENNE

**Office européen des brevets**

**Numéro de la demande**

EP 01 40 0467

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 924 890 A (WHITAKER CORP) 23 juin 1999 (1999-06-23) <br> * abrégé * <br> * colonne 2, ligne 10 - ligne 15 * <br> * colonne 2, ligne 19 - ligne 22 * <br> * colonne 6, ligne 10 - ligne 13 * <br> * colonne 8, ligne 10 - ligne 13 * <br> * colonne 8, ligne 19 - ligne 21 * <br> * colonne 9, ligne 38 - ligne 48 * <br> * colonne 10, ligne 5 - ligne 15 * <br> * colonne 11, ligne 9 - ligne 15 * <br> ----- | 1,15 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 5 juin 2001 | Papantoniou, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 0467

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

05-06-2001

| Document brevet cité au rapport de recherche | | Date de publication | Membre(s) de la famille de brevet(s) | | Date de publication |
|---|---|---|---|---|---|
| US 5909434 | A | 01-06-1999 | AU | 717076 B | 16-03-2000 |
| | | | AU | 3291597 A | 05-01-1998 |
| | | | BR | 9709483 A | 10-08-1999 |
| | | | CN | 1231785 A | 13-10-1999 |
| | | | EP | 0903023 A | 24-03-1999 |
| | | | WO | 9745976 A | 04-12-1997 |
| US 5822318 | A | 13-10-1998 | AU | 687227 B | 19-02-1998 |
| | | | AU | 3093695 A | 04-03-1996 |
| | | | BR | 9506276 A | 12-08-1997 |
| | | | CA | 2169649 A | 15-02-1996 |
| | | | CN | 1130963 A | 11-09-1996 |
| | | | EP | 0721704 A | 17-07-1996 |
| | | | FI | 961414 A | 20-05-1996 |
| | | | IL | 114761 A | 22-09-1999 |
| | | | JP | 9506231 T | 17-06-1997 |
| | | | WO | 9604718 A | 15-02-1996 |
| | | | ZA | 9505940 A | 01-02-1996 |
| US 4621368 | A | 04-11-1986 | JP | 60009239 A | 18-01-1985 |
| | | | GB | 2144606 A,B | 06-03-1985 |
| US 5729557 | A | 17-03-1998 | AU | 7368096 A | 09-04-1997 |
| | | | CN | 1197558 A | 28-10-1998 |
| | | | EP | 0852853 A | 15-07-1998 |
| | | | WO | 9711535 A | 27-03-1997 |
| EP 0924890 | A | 23-06-1999 | US | 6009553 A | 28-12-1999 |
| | | | JP | 11252054 A | 17-09-1999 |

EPO FORM P0460

Pour tout renseignement concernant cette annexe : voir Journal Officiel de l'Office européen des brevets, No.12/82